(19) **Europäisches Patentamt**

**European Patent Office**

**Office européen des brevets**

(11) **EP 1 235 022 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.⁷: **F16L 25/00**, F16L 47/06

(21) Anmeldenummer: **01103049.1**

(22) Anmeldetag: **09.02.2001**

(54) **Rohr-Bausatz**

Pipe-fitting kit

Ensemble de raccord de tuyaux

(84) Benannte Vertragsstaaten:
**AT BE CH CY DE DK ES FI FR GB GR IE IT LI LU MC NL PT SE TR**

(43) Veröffentlichungstag der Anmeldung:
**28.08.2002 Patentblatt 2002/35**

(73) Patentinhaber: **Hegler, Ralph-Peter, Dr.-Ing.**
**97688 Bad Kissingen (DE)**

(72) Erfinder: **Hegler, Ralph-Peter, Dr.-Ing.**
**97688 Bad Kissingen (DE)**

(74) Vertreter: **Rau, Manfred, Dr. Dipl.-Ing. et al Rau, Schneck & Hübner**
**Patentanwälte**
**Königstrasse 2**
**90402 Nürnberg (DE)**

(56) Entgegenhaltungen:
**EP-A- 0 890 770**       WO-A-00/31457
**US-A- 5 071 173**

**Beschreibung**

Die Erfindung betrifft einen Rohr-Bausatz nach dem Oberbegriff des Anspruches 1.

Ein derartiger Rohr-Bausatz ist aus der US 5,071,173 A und der WO 00/31457 bekannt. Bei dieser bekannten Ausgestaltung ist eine glattwandige Rohr-Muffe vorgesehen, deren Außen-Durchmesser nicht über den Außen-Durchmesser der Wellenberge der Rohrabschnitte vorsteht. Damit wird bei der bekannten Ausgestaltung erreicht, daß derartige Rohr-Bausätze zur Kanalrohr-Sanierung eingesetzt werden können, da die jeweils aneinandergesetzten Rohrabschnitte einen gleichmäßigen maximalen äußeren Durchmesser aufweisen. Gleichermaßen weist diese Ausgestaltung der Rohr-Muffe den Vorteil auf, daß der Transport der Rohrabschnitte, die jeweils an einem Ende eine Rohr-Muffe und am anderen Ende ein Spitzende aufweisen, möglich ist, ohne daß die Gefahr von Beschädigungen der Muffe auftritt. Wenn - wie beim allgemein bekannten Stand der Technik - das Spitzende ebenfalls einen Außen-Durchmesser aufweist, der dem Außen-Durchmesser der Rohr-Abschnitte entspricht, und wenn demzufolge die Muffe einen Innen-Durchmesser aufweist, der mindestens dem Außen-Durchmesser der Rohrabschnitte entspricht, dann besteht die Gefahr von Beschädigungen der Muffe beim Transport. Außerdem ist die Rohr-Muffe ein Hindernis beim Einziehen von zusammengesetzten Rohren in Kanäle u. dgl. Die Innenrohre derartiger Verbundrohre sind glattwandig, weisen aber fertigungsbedingt eine geringfügige Unebenheit auf. Der Begriff "glattwandig" im Sinne dieser Anmeldung umfaßt auch diese geringfügige Unebenheit.

Bei großen Nennweiten, beispielsweise bei Nennweiten ≥ DN 400, tritt das Problem auf, daß innen und außen glattwandige Rohr-Muffen nicht mehr ausreichend stabil sind.

Aus der EP 0 890 770 A2 ist bekannt geworden, in-line angeformte Rohr-Muffen an gewellten Verbundrohren über einen Teil ihrer axialen Erstreckung ebenfalls als Verbundrohre auszubilden mit einem glattwandigen Innenrohr-Abschnitt und einem aus Wellenbergen und Wellentälern gebildeten gewellten Außenrohr-Abschnitt. Diese bekannte Ausgestaltung weist wiederum den Nachteil auf, daß der Außen-Durchmesser der Rohr-Muffe deutlich größer ist als der Außen-Durchmesser der Rohrabschnitte, da jeweils der normale Rohrabschnitt auch als Spitzende eingesetzt wird.

Der Erfindung liegt die Aufgabe zugrunde, einen Rohr-Bausatz der gattungsgemäßen Art so auszugestalten, daß bei Beibehaltung der gattungsgemäßen Vorteile eine hohe Stabilität der Rohr-Muffe erreicht wird.

Diese Aufgabe wird erfindungsgemäß durch die Merkmale im Kennzeichnungsteil des Anspruches 1 gelöst. Der Kern der Erfindung liegt darin, daß sowohl das Spitzende als auch die Rohr-Muffe als Verbundrohr-Abschnitte ausgebildet sind, wobei die insgesamt zur Verfügung stehende Höhe der Wellenberge der Rohrabschnitte samt der Dicke der Innenrohre der Rohrabschnitte aufgeteilt wird auf die Höhe der Wellenberge samt Innenrohr-Abschnitt der Rohr-Muffe und die Höhe der Wellenberge und des Innenrohres des Spitzendes.

Die Wellenberge der Rohr-Muffe einerseits und des Spitzendes andererseits weisen eine deutlich kleinere Teilung als die Wellenberge der Rohrabschnitte auf. Günstige Verhältnisse geben die Ansprüche 3 und 4 wieder.

Weitere Merkmale, Vorteile und Einzelheiten der Erfindung ergeben sich aus der Beschreibung eines Ausführungsbeispiels anhand der Zeichnung. Es zeigt:

Fig. 1   ein Verbundrohr im Teil-Längsschnitt, das fortlaufend aus einem Rohrabschnitt, einer Rohr-Muffe und einem weiteren Rohrabschnitt hergestellt wird, und

Fig. 2   eine Rohrverbindung zwischen zwei Rohrabschnitten nach dem Durchtrennen des Verbundrohres.

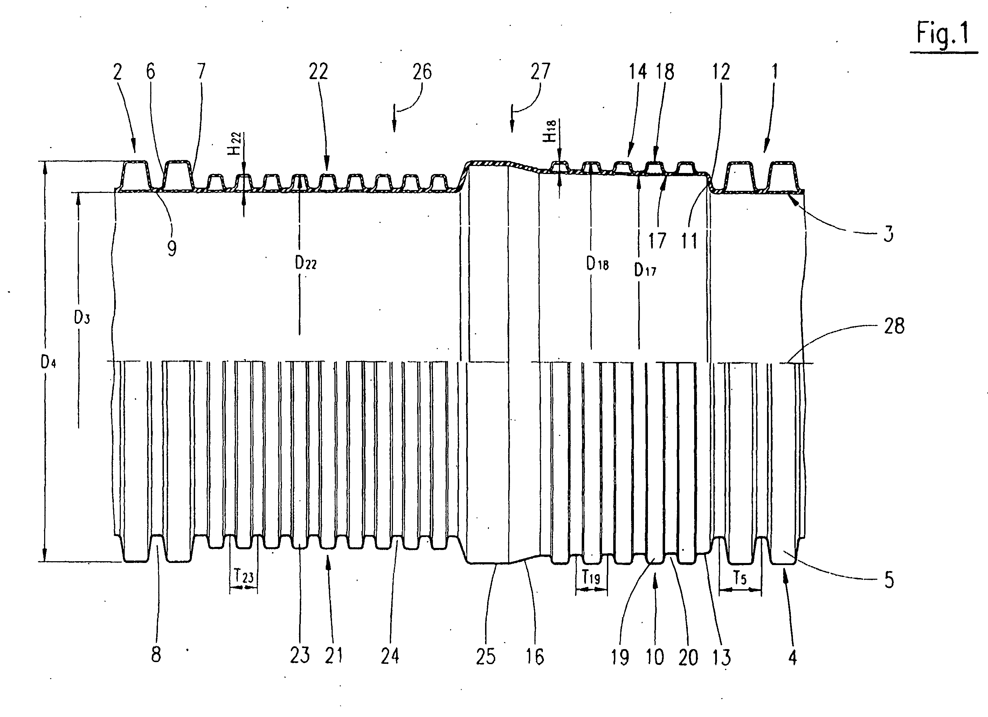

Wie Fig. 1 erkennen läßt, wird ein Verbundrohr fortlaufend in einem Rohr-Strang hergestellt, der im wesentlichen aus den eigentlichen Rohrabschnitten 1, 2 besteht. Diese weisen in üblicher Weise ein glattwandiges, zylindrisches Innenrohr 3 und ein gewelltes Außenrohr 4 auf. Dieses Außenrohr 4 weist etwa trapezförmige Wellenberge 5 auf, wobei jeweils zwischen den Flanken 6, 7 zweier benachbarter Wellenberge 5 ein Wellental 8 ausgebildet ist. Am Grund 9 des Wellentals 8 ist das Außenrohr 4 jeweils mit dem Innenrohr 3 verschweißt. Derartige Verbundrohre mit diesem Aufbau sind allgemein bekannt und in der Praxis verbreitet.

Zwischen den beiden Rohrabschnitten 1, 2, und zwar anschließend an den Rohrabschnitt 1, ist eine Rohr-Muffe 10 ausgebildet, die im Bereich des Muffengrundes 11, d. h. anschließend an einen Erweiterungsabschnitt 12 des Rohrabschnitts 1, einen kurzen glattwandigen Abschnitt 13 aufweist, der zylindrisch ausgebildet ist. Dieser glattwandige Abschnitt 13 ist gleichermaßen wie der Erweiterungsabschnitt 12 nicht doppelwandig, sondern überwiegend einwandig ausgebildet. An den glattwandigen Abschnitt 13 schließt sich wiederum ein Verbundrohr-Abschnitt 14 an. Im Anschluß daran ist die Rohr-Muffe 10 wieder einwandig ausgebildet, und zwar mit einem sich konisch nach außen zu einer Einführöffnung 15 hin erweiternden Einführabschnitt 16. Der Verbundrohr-Abschnitt 14 ist im Prinzip in gleicher Weise ausgebildet wie die Rohrabschnitte 1 und 2, d. h. er weist einen im wesentlichen zylindrischen, also glattwandigen, Innenrohr-Abschnitt 17 und einen gewellten ersten Außenrohr-Abschnitt 18 mit Wellenbergen 19 auf, wobei der erste Außenrohr-Abschnitt 18 ebenfalls jeweils im Bereich der Wellentäler 20 mit dem Innenrohr-Abschnitt 17 verschweißt ist. Die Wellenberge 19 sind im wesentlichen über die volle Länge der Rohr-Muffe 10 angeordnet, mit Ausnahme des Einführabschnitts 16 und des kurzen Abschnitts 13.

Zwischen der Rohr-Muffe 10 und dem Rohrabschnitt 2, also unmittelbar anschließend an diesen, ist ein Spitzende 21 ausgebildet, dessen Innenseite durch das Innenrohr 3 gebildet und begrenzt wird. Es ist mit einem gewellten zweiten Außenrohr-Abschnitt 22 mit Wellenbergen 23 versehen, wobei der zweite Außenrohr-Abschnitt 22 ebenfalls jeweils im Bereich der Wellentäler 24 mit dem Innenrohr 3 verschweißt ist. Die Außenkonturen aller Wellenberge 5, 19, 23 sind im wesentlichen ringzylindrisch.

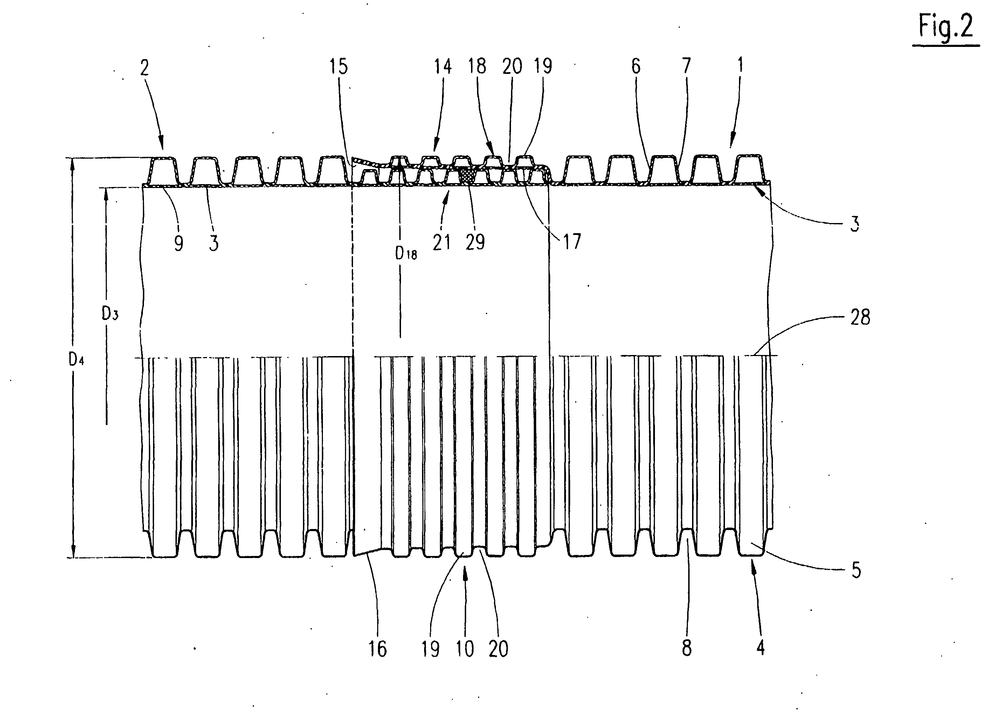

Zwischen der Rohr-Muffe 10 und dem Spitzende 21 befindet sich ein Übergangsabschnitt 25, der durch zwei Sägeschnitte 26, 27 als Abfall herausgeschnitten wird, wie in Fig. 1 angedeutet ist. Da dieses Trennen fortlaufend erfolgt, ist jeweils an einem Rohrabschnitt 1 oder 2 an einem Ende eine Rohr-Muffe 10 und am anderen Ende ein Spitzende 21 ausgebildet. Wie Fig. 2 entnehmbar ist, dient das in der Zeichnung dargestellte Spitzende 21 des Rohrabschnitts 2 dazu, in die Rohr-Muffe 10 des benachbarten Rohrabschnitts 1 eingesetzt zu werden, wodurch zwei Rohrabschnitte 1, 2 miteinander verbunden werden. Beim vollständigen Einstecken des Spitzendes 21 in die Rohr-Muffe 10 kommt der vorderste Wellenberg 23 zur Anlage am Erweiterungsabschnitt 12 im Bereich des Muffengrundes 11. Der dem Spitzende 21 benachbarte Wellenberg 5 liegt dann unmittelbar benachbart zur Einführöffnung 15 des Einführabschnitts 16 der Rohr-Muffe 10. Die Länge des Spitzendes 21 und die Länge der Rohr-Muffe 10 sind also etwa gleich.

Die Rohrabschnitte 1, 2 haben einen Außen-Durchmesser $D_4$, der dem Außen-Durchmesser des Außenrohres 4 entspricht. Die Rohr-Muffe 10 hat einen Außen-Durchmesser $D_{18}$, der dem Außen-Durchmesser des ersten Außenrohr-Abschnitts 18 entspricht, wobei der Außen-Durchmesser des Einführabschnitts 16 keinesfalls größer als $D_{18}$ ist. Der Außen-Durchmesser $D_{22}$ des Spitzendes 21 entspricht dem Außen-Durchmesser des zweiten Außenrohr-Abschnitts 22. Der Innen-Durchmesser $D_{17}$ der Rohr-Muffe 10 entspricht dem Innen-Durchmesser des Innenrohr-Abschnitts 17. Der Außen-Durchmesser $D_{22}$ des Spitzendes 21 und der Innen-Durchmesser $D_{17}$ der Rohr-Muffe 10 sind - unter Berücksichtigung eines geringfügigen Spiels und der Fertigungstoleranzen - etwa gleich. Insofern gilt: $1{,}01 \, D_{22} \leq D_{17} \leq 1{,}02 \, D_{22}$. Für den Außen-Durchmesser $D_{18}$ der Rohr-Muffe 10 gilt in bezug auf den Außen-Durchmesser $D_4$ der Rohrabschnitte 1 bzw. 2 $D_4 \approx D_{18}$.

Die Gesamthöhe $H_{22}$ der Wellenberge 23 des zweiten Außenrohr-Abschnitts 22 einschließlich der Wanddicke des Innenrohres 3 ist größer als die Gesamthöhe $H_{18}$ der Wellenberge 19 einschließlich der Dicke des Innenrohr-Abschnitts 17 des ersten Außenrohr-Abschnitts 18 der Rohr-Muffe 10. Es gilt: $0{,}3(H_{18} + H_{22}) \leq H_{18} \leq 0{,}7 \, (H_{18} + H_{22})$. Weiterhin ergibt sich aus der Zeichnung, daß für die Teilung $T_{19}$ der Wellenberge 19 der Rohr-Muffe 10 im Verhältnis zur Teilung $T_5$ der Wellenberge 5 der Rohrabschnitte 1, 2 in Richtung der Mittel-Längs-Achse 28 gilt: $0{,}3 \, T_5 \leq T_{19} \leq 0{,}7 \, T_5$. Für die Teilung $T_{23}$ der Wellenberge 23 des Spitzendes 21 gilt in gleicher Weise: $0{,}3 \, T_5 \leq T_{23} \leq 0{,}7 \, T_5$.

Aus den vorstehenden Ausführungen ergibt sich, daß die axiale Erstrekkung und die radiale Erstrekkung der Wellentäler 24 des Spitzendes 21 erheblich kleiner ist als diejenige der Wellentäler 8 der Rohrabschnitte 1 bzw. 2. Eine im Wellental 24 angeordnete Ring-Dichtung 29 kann daher ein wesentlich kleineres Volumen haben als eine in einem Wellental 8 anzuordnende Ring-Dichtung.

Die Herstellung des endlosen Verbundrohres, bei dem jeweils zwischen zwei Rohrabschnitten 1 und 2 in-line eine Rohr-Muffe 10 und ein Spitzende 21 angeformt werden, erfolgt mit einer bekannten Technologie, beispielsweise so, wie es in der EP 0 563 575 B1 oder der EP 0 890 770 A2 dargestellt und beschrieben ist, worauf verwiesen werden darf.

## Patentansprüche

1. Rohr-Bausatz

   - mit einem ersten und einem zweiten Rohrabschnitt (1, 2) aus Kunststoff, die

     -- jeweils ein glattwandiges, zylindrisches Innenrohr (3) und ein gewelltes Außenrohr (4) mit ringzylindrischen Wellenbergen (5) und Wellentälern (8) und
     -- einen Außen-Durchmesser ($D_4$)

     aufweisen,

   - mit einer in-line angeformten Rohr-Muffe (10) an einem Ende des ersten Rohrabschnitts (1), die

     -- einen Außen-Durchmesser ($D_{18}$) und
     -- einen Innen-Durchmesser ($D_{17}$)

     aufweist, und

   - mit einem in-line angeformten Spitzende (21) an einem Ende des zweiten Rohrabschnitts (2),

     -- das aus dem Innenrohr (3) und
     -- einem zweiten Außenrohr-Abschnitt (22) gebildet ist, und
     -- das einen Außen-Durchmesser ($D_{22}$) aufweist, für den in Bezug auf den Innen-Durchmesser ($D_{17}$) der Rohr-Muffe (10) gilt: $D_{22} \approx D_{17}$,

   **dadurch gekennzeichnet,**
   **daß** die Rohr-Muffe (10) als Verbundrohr mit einem glattwandigen Innenrohr-Abschnitt (17) und einem gewellten ersten Außenrohr-Abschnitt (18) mit Wellenbergen (19) und Wellentälern (20) ausgebildet ist und

**daß** für die radiale Höhe ($H_{18}$) der Rohr-Muffe (10) im Vergleich zur radialen Höhe ($H_{22}$) des Spitzendes (21) gilt:

$$0,3(H_{18} + H_{22}) \leq H_{18} \leq 0,7 (H_{18} + H_{22}).$$

2. Rohr-Bausatz nach Anspruch 1, **dadurch gekennzeichnet, daß** für den Außen-Durchmesser ($D_4$) des Außenrohres (4) und den Außen-Durchmesser ($D_{18}$) der Rohr-Muffe (10) gilt: $D_4 \approx D_{18}$.

3. Rohr-Bausatz nach einem der Ansprüche 1 oder 2, **dadurch gekennzeichnet,**
   **daß** für die Teilung ($T_5$) der Wellenberge (5) der Rohrabschnitte (1, 2) im Vergleich zu der Teilung ($T_{19}$) der Rohr-Muffe (10) gilt:

$$0,3\ T_5 \leq T_{19} \leq 0,7\ T_5.$$

4. Rohr-Bausatz nach einem der Ansprüche 1 bis 3, **dadurch gekennzeichnet,**
   **daß** für die Teilung ($T_5$) der Wellenberge (5) der Rohrabschnitte (1, 2) im Vergleich zu der Teilung ($T_{23}$) der Wellenberge (23) des Spitzendes (21) gilt:
   $0,3\ T_5 \leq T_{23} \leq 0,7\ T_5$.

**Claims**

1. A pipe construction kit comprising

   - a first and a second pipe section (1, 2) of plastic material, each of which having

     -- a smooth-walled cylindrical internal pipe (3) and a corrugated external pipe (4) with annular cylindrical elevations (5) and troughs (8), and
     -- an outside diameter ($D_4$);

   - a socket (10), which is in-line molded on one end of the first pipe section (1), having

     -- an outside diameter ($D_{18}$) and
     -- an inside diameter ($D_{17}$); and

   - a spigot (21), which is in-line molded on an end of the second pipe section (2), comprising

     -- the internal pipe (3) and
     -- a second external pipe section (2), and
     -- having an outside diameter ($D_{22}$), to which the following applies in relation to the inside diameter ($D_{17}$) of the socket (10): $D_{22} \approx D_{17}$;

   **characterized**
   **in that** the socket (10) is a twin-wall pipe having a smooth-walled internal pipe section (17) and a corrugated first external pipe section (18) with elevations (19) and troughs (20) and
   **in that** $0.3 (H_{18} + H_{22}) \leq H_{18} \leq 0.7 (H_{18} + H_{22})$ applies to the radial height ($H_{18}$) of the socket (10) as compared to the radial height ($H_{22}$) of the spigot (21).

2. A pipe construction kit according to claim 1, **characterized in that** $D_4 \approx D_{18}$ applies to the outside diameter ($D_4$) of the external pipe (4) and the outside diameter ($D_{18}$) of the socket (10).

3. A pipe construction kit according to one of claims 1 or 2, **characterized in that** $0.3\ T_5 \leq T_{19} \leq 0.7\ T_5$ applies to the spacing ($T_5$) of the elevations (5) of the pipe sections (1, 2) as compared to the spacing ($T_{19}$) of the socket (10).

4. A pipe construction kit according to one of claims 1 to 3, **characterized in that** $0.3\ T_5 \leq T_{23} \leq 0.7\ T_5$ applies to the spacing ($T_5$) of the elevations (5) of the pipe sections (1, 2) as compared to the spacing ($T_{23}$) of the elevations (23) of the spigot (21).

**Revendications**

1. Ensemble de raccord de tuyaux

   - avec un premier et un deuxième tronçon de tuyau (1, 2) en matériau synthétique qui comprennent

     - respectivement un tuyau intérieur cylindrique à paroi lisse (3) et un tuyau extérieur ondulé (4) avec des crêtes d'ondulations cylindriques annulaires (5) et des creux d'ondulations (8) et
     - un diamètre extérieur ($D_4$)

   - avec un manchon de tuyau formé en ligne (10) à une extrémité du premier tronçon de tuyau (1) qui comprend

     - un diamètre extérieur ($D_{18}$) et
     - un diamètre intérieur ($D_{17}$) et

   - avec une extrémité resserrée formée en ligne (21) à une extrémité du deuxième tronçon de tuyau (2), qui est constituée par

     - le tuyau intérieur (3) et par

- un deuxième tronçon de tuyau extérieur (22) et qui comprend
- un diamètre extérieur ($D_{22}$) pour lequel, par rapport au diamètre intérieur ($D_{17}$) du manchon de tuyau (10), s'applique la relation : $D_{22} \approx D_{17}$.

**caractérisé en ce que** le manchon de tuyau (10) est configuré comme tuyau composite avec un tronçon de tuyau intérieur (17) à paroi lisse et un premier tronçon de tuyau extérieur ondulé (18) avec des crêtes d'ondulations (19) et des creux d'ondulations (20) et **en ce que** la relation suivante est applicable pour la hauteur radiale ($H_{18}$) du manchon de tuyau (10) par comparaison avec la hauteur radiale ($H_{22}$) de l'extrémité resserrée (21) : $0{,}3\,(H_{18} + H_{22}) \leq H_{18} \leq 0{,}7\,(H_{18} + H_{22})$.

2. Ensemble de raccord de tuyaux selon la revendication 1, **caractérisé en ce que** la relation suivante est applicable pour le diamètre extérieur ($D_4$) du tuyau extérieur (4) et le diamètre extérieur ($D_{18}$) du manchon de tuyau (10) : $D_4 \approx D_{18}$.

3. Ensemble de raccord de tuyaux selon l'une quelconque des revendications 1 ou 2, **caractérisé en ce que** la relation suivante est applicable pour le pas ($T_5$) des crêtes d'ondulations (5) des tronçons de tuyaux (1, 2) par comparaison avec le pas ($T_{19}$) du manchon de tuyau (10) : $0{,}3\,T_5 \leq T_{19} \leq 0{,}7\,T_5$.

4. Ensemble de raccord de tuyaux selon l'une quelconque des revendications 1 à 3, **caractérisé en ce que** la relation suivante est applicable pour le pas ($T_5$) des crêtes d'ondulations (5) des tronçons de tuyaux (1, 2) par comparaison avec le pas ($T_{23}$) des crêtes d'ondulations (23) de l'extrémité resserrée (21) : $0{,}3\,T_5 \leq T_{23} \leq 0{,}7\,T_5$.

Fig.1

Fig.2

EP 1 235 022 B1